# EUROPÄISCHE PATENTANMELDUNG

(11) **EP 4 008 547 A1**
(43) Veröffentlichungstag der Anmeldung: **08.06.2022**
(21) Anmeldenummer: 20212008.5
(22) Anmeldetag: 04.12.2020
(51) Int. Cl.: B32B 7/12, B32B 27/08, B32B 27/20, B32B 27/30, B32B 27/32

(54) **BARRIEREFOLIE, IHRE HERSTELLUNG UND IHRE VERWENDUNG**

(71) Anmelder: Coveris Flexibles Deutschland GmbH, 34414 Warburg (DE)
(72) Erfinder: REMKE, Christoph, 33790 Halle (DE); VOLLMER, Jan - Torsten, D-83355 Grabenstätt (DE)
(74) Vertreter: Schneider, Michael

(57) **Zusammenfassung**

Barrierefolie, die aufweist:
- eine Gas-Barriere-Schicht aus Ethylen-Vinylalkohol-Copolymer und
- zwei Schutzschichten aus Polypropylen, welche die Gas-Barriere-Schicht beidseitig einbetten und die ein Wasser-Bindemittel enthalten.

## Beschreibung

### Technisches Feld

Die Erfindung betrifft eine Barrierefolie basierend auf einer Ethylen-Vinylalkohol-Copolymer-Schicht für flexible Verpackungen.

### Hintergrund

Der Sauerstofftransport durch Kunststofffolien stellt eine Herausforderung der Verpackungsindustrie, insbesondere für die Verpackung von Lebensmittel, Tiernahrung und ähnliches, dar. Der Sauerstoff verursacht, dass die Lebensmittel oxidieren und verderben. So werden fette Lebensmittel wie Wurst schnell ungenießbar und andere Lebensmittel, wie z.B. Fruchtsäfte, verfärben sich.

Polyamid (PA) ist ein günstiges und gern genutztes Material für solche Verpackungen, das für viele Anwendungen eine ausreichende Gas-Barriere für Sauerstoff aufweist. Für die Verwendung als Verpackungsfolie wird PA mit anderen Kunststoffen kombiniert, wobei diese Kombinationen nicht oder nur mit extrem hohem Aufwand recyclingfähig sind.

Soll in einer Kunststofffolie Ethylen-Vinylalkohol-Copolymer (EVOH) verwendet werden, ist zu beachten, dass die Gasdichtheit einer EVOH-Schicht stark abnimmt, wenn sie mit Wasser in Berührung kommt, wie dies insbesondere beim Sterilisieren von Produkten und ihrer Verpackung der Fall ist. In Fachkreisen wird dies als "Retort-Schock" bezeichnet. Daher galt diese Art der Gasbarriere für Sterilisationsanwendungen als ungeeignet.

Zur Lösung dieses Problems wurde jedoch in der DE 10 2014 013 827 A1 empfohlen, dass der bereits bekannte Aufbau aus PA/EVOH/PA, der bisher für Sterilisationsanwendungen auf Grund des großen "Retort-Schocks" als ungeeignet galt, verwendet werden kann, wenn die Gasbarriere-Schicht monoaxial gereckt wird. Weiterhin wird in der DE 10 2014 013 827 A1 eine grundsätzlich ablehnende Haltung gegenüber der Verwendung von Polypropylen (PP) in Kombination mit EVOH für flexible Verpackungen vermittelt.

Die Erfindung hat sich vor diesem Hintergrund die Aufgabe gestellt, eine verbesserte Barrierefolie, eine Verbundfolie die eine solche Barrierefolie aufweist, sowie eine neue Verwendung dieser Barrierefolie, wie auch ein Herstellungsverfahren für diese Barrierefolie bereitzustellen, sodass der Einsatz von PP in Kombination mit EVOH in Anwendungen, in denen die Barrierefolie mit Feuchtigkeit bzw. Wasser in Berührung kommt, erstmals möglich wird.

### Zusammenfassung der Erfindung

Diese Aufgabe wird durch eine Barrierefolie gemäß Anspruch 1 gelöst. Die Erfindung betrifft daher eine Barrierefolie, die eine Gas-Barriere-Schicht aus Ethylen-Vinylalkohol-Copolymer und zwei Schutzschichten aus Polypropylen, welche die Gas-Barriere-Schicht beidseitig einbetten und die ein Wasser-Bindemittel enthalten, aufweist.

Diese Aufgabe wird weiterhin durch eine Verbundfolie gemäß Anspruch 11 gelöst. Die Erfindung betrifft daher eine Verbundfolie die zumindest eine erfindungsgemäße Barrierefolie und zumindest eine weitere Schicht, insbesondere eine Polypropylen-Schicht, oder zumindest eine weitere Folie, insbesondere eine Polypropylen-Folie, benachbart zu der Barrierefolie aufweist.

Diese Aufgabe wird weiterhin durch eine Verwendung gemäß Anspruch 13 gelöst. Die Erfindung betrifft daher eine Verwendung einer Barrierefolie, wobei die Barrierefolie eine Gas-Barriere-Schicht aus Ethylen-Vinylalkohol-Copolymer und zwei Schutzschichten aus Polypropylen, welche die Gas-Barriere-Schicht beidseitig einbetten und die ein Wasser-Bindemittel enthalten, aufweist, als Verpackungsmaterial oder Bestandteil eines Verpackungsmaterials in einer Wärmebehandlung mit erhöhter Feuchtigkeit zur Verminderung des "Retort-Schocks".

Diese Aufgabe wird weiterhin durch ein Herstellungsverfahren gemäß Anspruch 15 gelöst. Die Erfindung betrifft daher ein Herstellungsverfahren für eine Barrierefolie, wobei eine Gas-Barriere-Schicht aus Ethylen-Vinylalkohol-Copolymer beidseitig in jeweils eine Schutzschicht aus Polypropylen eingebettet wird, insbesondere durch Coextrusion, wobei in die Schutzschicht ein Wasser-Bindemittel eingebracht wird, insbesondere in der Größenordnung von 1 bis 20 Prozent, bevorzugt 5-10%, (je nach Substanz des eingesetzten Wasser-Bindemittels) der jeweiligen Schutzschicht.

Bei der erfindungsgemäßen Barrierefolie hat die Gas-Barriere-Schicht die Aufgabe, die Sauerstoffdiffusion durch die Barrierefolie zu reduzieren bzw. weitestgehend zu unterbinden.

Die Schutzschichten bedecken die Gas-Barriere-Schicht beidseitig, sodass die Gas-Barriere-Schicht bestmöglich vor Wasser und Feuchtigkeit geschützt wird. Ein vollständiger Schutz vor Wasser und Feuchtigkeit ist im Allgemeinen unter üblichen Bedingungen jedoch nicht möglich.

Deswegen wird ein Wasser-Bindemittel in den Schutzschichten eingesetzt, das geeignet ist, von außen auf die Barrierefolie einwirkendes Wasser bzw. Feuchtigkeit bereits in der Schutzschicht zu binden, sodass möglichst wenig Wasser bzw. Feuchtigkeit bis zur Gas-Barriere-Schicht gelangen kann. Das Bindemittel nimmt also bis zu seiner Sättigung Wasser bzw. Feuchtigkeit auf, sodass nur mehr ein geringer Restanteil der Feuchtigkeit bis zu der Gas-Barriere-Schicht gelangen kann und in die Gas-Barriere-Schicht eindringen kann. Dies kann natürlich auch bei der erfindungsgemäßen Barrierefolie zu einem Retort-Schock führen, der jedoch wesentlich geringer ausfällt, als dies der Fall wäre, wenn die Schutzschicht kein Wasser-Bindemittel aufweisen würde.

Bedingt durch den Umstand, dass das Wasser im Wesentlichen in der Schutzschicht abgefangen wird, kann die Gas-Barriere-Schicht - im Vergleich zu einer Barrierefolie, bei der dieser wasserabsorbierende Mechanismus in der Schutzschicht nicht vorgesehen ist - nach Beendigung der Behandlung in der feuchten Umgebung wesentlich schneller wieder trocken und somit rascher wieder ihre bestimmungsgemäße Gas-Barriere-Funktion erfüllen.

Daher eignet sich die erfindungsgemäße Barrierefolie sogar als solche bereits als Verpackungsmaterial. Bevorzugt kommt sie jedoch als Bestandteil eines Verpackungsmaterials, insbesondere als Bestandteil einer Verpackungsfolie, zum Einsatz. Dadurch lassen sich die mit den genannten erfindungsgemäßen Maßnahmen einhergehenden Vorteile mit den Eigenschaften anderer Bestandteile des Verpackungsmaterials bzw. der Verpackungsfolie kombinieren, sodass Eigenschaften wie mechanische Beanspruchbarkeit, Bedruckbarkeit oder auch Siegelfähigkeit optimiert werden können.

Die erfindungsgemäße Barrierefolie erlaubt nun erstmals als solche oder als Bestandteil einer Verbundfolie ihre Verwendung in einer Wärmebehandlung mit erhöhter Feuchtigkeit, wobei damit verpackte Lebensmittel einer wesentlich geringeren Sauerstoffeinwirkung ausgesetzt sind, weil der "Retort-Schock" vermindert ist bzw. seine Dauer wesentlich verkürzt wird.

Das Wasser-Bindemittel wird über die Polypropylen-Schichten in die Barrierefolie eingebracht. Dies kann beispielsweise so geschehen, dass entsprechende Substanzen, die als Wasser-Bindemittel geeignet sind, bereits dem Polypropylen-Granulat beigefügt werden. Bevorzugt wird das Wasser-Bindemittel in der Größenordnung von 1 bis 20 Massenprozent, bevorzugt 5-10%, (je nach Substanz des eingesetzten Wasser-Bindemittels) der jeweiligen Polypropylen-Schicht beigefügt. Insbesondere kann die Dosierung vom jeweils zum Einsatz kommenden Wasser-Bindemittel abhängen. So ist beispielsweise für Kupfersulfat ein Prozentanteil am oberen Ende des angeführten Bereiches zu wählen. Der Gesamtaufbau der Barrierefolie weist daher bevorzugt drei Schichten auf, wobei die erste Schicht eine Polypropylen-Schicht mit Wasser-Bindemittel ist, die zweite Schicht eine EVOH-Schicht ist, und die dritte Schicht wieder eine Polypropylen-Schicht mit Wasser-Bindemittel ist. Die drei Schichten können beispielsweise durch Coextrusion, Extrusionsbeschichtung oder Kaschierung hergestellt werden. Gegebenenfalls ist zwischen zwei benachbarten Schichten eine Haftvermittlerschicht vorgesehen.

Weitere, besonders vorteilhafte Ausgestaltungen und Weiterbildungen der Erfindung ergeben sich aus den abhängigen Ansprüchen sowie der nachfolgenden Beschreibung.

Auch wenn das Wasser-Bindemittel das Wasser nur vorübergehend bindet, kann ein positiver Effekt auftreten, wenn das Wasser-Bindemittel das Wasser anschließend in so geringen Mengen abgibt, dass die Schutzeigenschaft, also die Sauerstoff-Barriereeigenschaft, der Gas-Barriere-Schicht ausreichend erhalten bleibt. So ein vorübergehendes Binden des Wassers lässt sich beispielsweise mittels eines hygroskopischen Materials als Wasser-Bindemittel realisieren. Es ist in der Praxis aber kaum vermeidbar, dass ein solches aus einem hygroskopischen Material besehendes Wasser-Bindemittel zu einem beliebigen Zeitpunkt zu viel Wasser auf einmal freisetzt und somit den Sauerstoffdiffusionsschutz der Barrierefolie aufhebt. Besonders vorteilhaft ist daher eine Barrierefolie, bei der das Wasser-Bindemittel dazu ausgebildet ist bzw. geeignet ist, Wasser im Wesentlichen irreversibel zu binden. Hierbei bedeutet eine im Wesentlichen irreversible Bindung nicht zwingend, dass ein wieder Freigeben des Wassers technisch unmöglich ist, sondern, dass es bei der bestimmungsgemäßen Verwendung der Barrierefolie nicht oder nur vernachlässigbar auftritt. Das bedeutet, dass bei den für die Barrierefolie typischen mechanischen Belastungen und Temperaturen in einer typischen Anwendungsumgebung das Wasser im Wasser-Bindemittel gebunden bleibt. Daraus resultiert der Vorteil, dass es unter den bestimmungsgemäßen Rahmen- bzw. Einsatzbedingungen ausgeschlossen ist, dass das Wasser-Bindemittel zu irgendeinem Zeitpunkt das Wasser wieder abgibt. Nach der Feuchtigkeitseinwirkung, der irreversiblen Bindung des Wassers durch das Wasser-Bindemittel und der Trocknung der Barrierefolie bleibt die Sauerstoff-Barriereeigenschaft der Barrierefolie also im Wesentlichen für den zur Verpackung von Lebensmitteln bestimmten Zeithorizont erhalten.

Das Wasser-Bindemittel kann derart ausgewählt bzw. beschaffen sein, dass die Bindung des Wassers im Wasser-Bindemittel physikalisch oder chemisch erfolgt. Auch Wasser-Bindemittel, bei denen die Wasser-Bindung chemisch und physikalisch oder durch einen der Prozesse dominierend erfolgt, sind möglich.

So kann beispielsweise die physikalische Bindung im Wesentlichen darauf beruhen, dass das Wasser-Bindemittel Wasser in seiner Molekular- bzw. Kristallstruktur einbettet bzw. in dieser Struktur absorbiert.

Für die physikalische Bindung können beispielsweise Molekularsiebe bzw. Zeolithe, Alkali- bzw. Erdalkali-Aluminiumsilikate, deren Kristallstruktur eine Art Käfig bilden usw. genutzt werden. Diese Arten der Wasser-Bindemittel können alleinig oder in Kombination miteinander vorgesehen sein. Die Bindung von Wasser bzw. Feuchtigkeit mittels Molekularsieb, bei dem für einen Regenerationsprozess beispielsweise eine Temperatur erreicht werden muss, die über dem Schmelzpunkt des verwendeten Kunststoffs liegt, in dem das Wasser-Bindemittel enthalten ist, ist unter den zur Anwendung kommenden Temperaturen bei der bestimmungsgemäßen Verwendung der Folie als irreversible Bindung anzusehen.

Mit der Verwendung von chemischen Wasser-Bindemitteln geht der Vorteil einher, dass sich die benötigte Menge an Wasser-Bindemittel gut bestimmen lässt. Während die Wasseraufnahme bei physikalischen Wasser-Bindemitteln sehr stark von der mikroskopischen Struktur des Wasser-Bindemittels abhängt, und somit einer starken Streuung unterworfen sein kann, kann die Wasseraufnahme der chemischen Wasser-Bindemittel besser vorhergesagt bzw. technisch eingestellt werden. Weiterhin binden die meisten üblichen chemischen Wasser-Bindemittel irreversibel im zuvor erörterten Sinn. Die chemische Bindung des Wassers erfolgt hierbei vorwiegend darauf beruhend, dass das Wasser-Bindemittel mit Wasser zu Hydroxid bzw. Säure reduziert.

Als chemische Wasser-Bindemittel seien hier in nicht abschließender weise und somit beispielhaft Calciumoxid (CaO), Phosphorpentoxid (P₄O₁₀), bzw. (Di)phosphorpentoxid (P₂O₅), Calciumchlorid (CaCl₂), Kaliumhydroxid (KOH) und Kupfersulfat (Cu(SO₄)) genannt, wobei sich Calciumoxid (CaO) als besonders gut geeignet herausgestellt hat. Auch kann eine Mischung oder Kombination der angeführten Wasser-Bindemittel vorliegen.

Im Allgemeinen muss mit einer Verpackung, die durch die Barrierefolie gebildet ist, Information betreffend das verpackte Produkt in irgendeiner Art vermittelt werden. So sollten bei Lebensmittel beispielsweise Informationen über die Inhaltsstoffe kommuniziert werden. Dies kann dadurch erreicht werden, dass zumindest eine Schutzschicht der Barrierefolie bedruckt ist. Diese bedruckte Schutzschicht kann so die äußerste Schicht einer Verpackung bilden oder von weiteren durchsichtigen Schichten bedeckt sein. Technisch betrachtet geht also mit der Ausführung mindestens einer Schutzschicht als bedruckte Schutzschicht der Vorteil einher, dass die Barrierefolie genutzt werden kann, um eine dünne Verpackung zu realisieren, die einem Konsumenten alle nötigen Produktinformationen präsentiert. Ohne diese technische Maßnahme müsste hierfür eine weitere Schicht aufgebracht werden, was in Bezug auf Materialverbrauch, Materialkosten, Recyclingfähigkeit, Gewicht der Folie usw. gegebenenfalls aufwändiger wäre.

Die Innenseite einer solchen aus der Barrierefolie gebildeten Verpackung kann im Allgemeinen dazu verwendet werden, die Innenseite mit sich selbst zu versiegeln, um die Verpackung als Beutel zu realisieren, oder diese Innenseite gegen ein anderes Teil der Verpackung, wie etwa eine Schüssel, zu versiegeln. Die Innenseite ist dann üblicherweise nicht bedruckt und die Schutzschicht der Barrierefolie bildet dann eine sogenannte Siegelschicht der Barrierefolie.

Üblicherweise wird nur eine der Schutzschichten als Siegelschicht benutzt. Zu erwähnen ist jedoch, dass auch beide Schutzschichten als Siegelschicht zum Einsatz kommen können.

Die Barrierefolie kann jedoch auch so aufgebaut sein, dass sie als zentrale Schicht das EVOH aufweist, diese EVOH Schicht in eine zusätzliche Zwischenschicht eingebettet ist und erst benachbart an diese zusätzliche Zwischenschicht beidseitig die zwei Schutzschichten aus Polypropylen, die das Wasser-Bindemittel enthalten, vorgesehen sind. Bevorzugt ist zum Erhalt der einfachen Recycling-Fähigkeit die zusätzliche Zwischen-Schicht zwischen der EVOH Schicht und der das Wasser-Bindemittel enthaltenden Polypropylen-Schutzschicht ebenfalls aus Polypropylen gefertigt. Im vorliegenden Fall ist die Zwischenschicht jedoch frei von Wasserbindemittel. Gegebenenfalls sind auch in dieser Konfiguration der Barrierefolie Haftvermittlerschichten vorzusehen.

Die erfindungsgemäße Barrierefolie kann jedoch - wie erwähnt - auch als Bestandteil einer Verbundfolie zum Einsatz kommen. Solche Verbundfolien, die aus unterschiedlichen Schichten verschiedener Materialien bestehen, sind häufig nicht oder nur mit extremem Aufwand recyclingfähig. Daher hat es sich als besonders vorteilhaft erwiesen, wenn die Verbundfolie derart aufgebaut ist, dass sie eine Polypropylen-Schicht oder eine Polypropylen-Folie benachbart zu der Barrierefolie aufweist. Dies kann einseitig zu der Barrierefolie oder auch beidseitig zu der Barrierefolie vorgesehen sein. Bevorzugt kann auch in dieser zusätzlichen Polypropylen-Schicht bzw. -Folie das Wasser-Bindemittel enthalten sein. Weiterhin sei erwähnt, dass die Konzentration des Wasser-Bindemittels im Vergleich zwischen den PP-Schutzschichten der Barrierefolie und den zusätzlichen PP-Schichten bzw. -Folien nicht identisch sein muss. So kann es z.B. von Vorteil sein, wenn die PP-Schutzschichten der Barrierefolie eine geringere Konzentration des Wasser-Bindemittels aufweisen als die zusätzlichen PP-Schichten bzw. -Folien. Damit geht die vorteilhafte Wirkung einher, dass in den zusätzlichen PP-Schichten bzw. -Folien ein größerer Anteil der Flüssigkeit abgefangen wird und die als Gas-Barriere-Schicht fungierende zentrale EVOH-Schicht nach der Feuchtigkeitseinwirkung rascher wieder ihre Gas-Barriere-Funktion realisieren kann, weil sie schneller wieder austrocknen kann.

Diese Maßnahme kann einseitig oder auch beidseitig zur Barrierefolie vorgesehen sein. Damit ist eine Verbundfolie realisiert, die im Wesentlichen, also abgesehen von der vernachlässigbaren EVOH-Schicht, eine "Monomaterial-Verbundfolie" bildet.

Diese "Monomaterial-Verbundfolie" lässt sich auf einfachste Weise recyclieren, was üblicherweise durch Schreddern der Verbundfolie und Herstellen von Polypropylen-Granulat geschieht. Dieses Polypropylen-Granulat lässt sich wieder problemlos als granularer Monomaterialkunststoff in Folienherstellungsprozessen bzw. -Verfahren einsetzen.

In Bezug auf die erfindungsgemäße Barrierefolie hat es sich als besonders vorteilhaft erwiesen, dass sich diese entweder als solche oder als Bestandteil einer Verbundfolie problemlos in Autoklaven verwenden lässt.

Es wurden Versuche an einer nicht additivierten (dies bedeutet ohne Wasser-Bindemittel in der Schutzschicht) und verschieden erfindungsgemäß additivierten (dies bedeutet mit Wasser-Bindemittel in der Schutzschicht) 40 µm Polypropylen/EVOH/Polypropylen Folien durchgeführt. Die Folien wurden für 30 min mit 131°C heißem Wasserdampf sterilisiert. Bei der erfindungsgemäßen Folie wurde als Wasser-Bindemittel Calciumoxid (CaO) in den Polypropylen-Schichten verwendet.

Im Anschluss an die Sterilisation wurde die Sauerstoffpermeation (OTR = Oxygen Transmission Rate) bei 23°C und 50% rH ("rH", auch als "RH" bezeichnet, steht hier für relative Luftfeuchtigkeit) an den verschiedenen Folien gemessen.

Für alle Folien wurde vor der Sterilisation eine OTR von < 0,5 ccm/m²/Tag gemessen.

Nach der Sterilisation befand sich der OTR-Wert der nicht additivierten Folie erst nach 48 h in einem messbaren Bereich von < 400 ccm/m²/Tag. Erst nach weiteren 24 h stabilisierte sich der OTR Wert im Bereich von < 2 ccm/m²/Tag.

Bei der erfindungsgemäßen Barrierefolie konnten folgende Ergebnisse beispielhaft erzieht werden:

Bei einer Dosierung von 3% CaO als Wasserbindemittel, bezogen auf die Gesamtfoliendicke der Barrierefolie, wurde bereits 10 h nach der Sterilisation eine OTR von < 170 ccm/m²/Tag, nach weiteren 2 h eine OTR von < 55 ccm/m²/Tag und nach insgesamt 19 h nach der Sterilisation eine OTR von < 2 ccm/m²/Tag gemessen.

Dagegen wurde bei einer Dosierung von nur 1,5% CaO als Wasserbindemittel, bezogen auf die Gesamtfoliendicke der Barrierefolie,-noch nach 12h ein OTR von mehr als 300 ccm/m²/Tag gemessen.

Die angegebene Einheit ist in Fachkreisen gebräuchlich und bedeutet Kubikzentimeter pro Quadratmeter und Tag. Bei der Verwendung dieser erfindungsgemäßen Barrierefolie in einer Verbundfolie sind, bedingt durch die weiteren, insbesondere PP, Folien bzw. Schichten, noch geringere Werte zu erwarten. Daher ergibt sich eine vortreffliche Eignung der Barrierefolie also solche wie auch als Bestandteil einer Verbundfolie für flexible und auch extrem dünne Verpackungen.

Demgegenüber wurden für hinsichtlich ihres Aufbaus vergleichbare Folien (Polypropylen/EVOH/Polypropylen) ohne die erfindungsgemäßen Maßnahmen Zeiträume von bis zu 14 Tage ermittelt, bis der Retort-Schock abgeklungen ist (siehe hierzu DE 10 2014 013 827 A1, Absatz 0019). Auch wurde festgestellt, dass flexible Verpackungen mit einer solchen Lagenkonfiguration nicht möglich sind, weil der Retort-Schock nur durch extrem dicke Polypropylen-Lagen zu reduzieren ist (siehe hierzu DE 10 2014 013 827 A1, Absatz 0020). Solche bekannten Folien weisen eine Dicke der jeweiligen Polypropylen-Schicht von wenigstens 200 µm auf, was zu einer Gesamtfoliendicke von ca. 500 µm führt. Manifestiert ist hier auch wörtlich: *"Der gleiche Schichtaufbau mit dünneren Polypropylenschichten, sodass die entsprechende Folie für flexible Deckel oder Beutel einsetzbar bleibt, führt nicht zu einem ausreichenden Schutz der EVOH-Schicht vor Feuchtigkeit bei der Sterilisation."* Dies steht im krassen Gegensatz zur hier offenbarten Erfindung.

Diese und weitere Aspekte der Erfindung ergeben sich durch die nachfolgend erörterten Figuren.

### Figurenkurzbeschreibung

Die Erfindung wird im Folgenden unter Hinweis auf die beigefügten Figuren anhand von Ausführungsbeispielen noch einmal näher erläutert, auf welche die Erfindung jedoch nicht beschränkt ist. Dabei sind in den verschiedenen Figuren gleiche Komponenten mit identischen Bezugszeichen versehen. Es zeigen auf schematische Weise:
- Fig. 1: eine erfindungsgemäße Barrierefolie im Querschnitt;
- Fig. 2: eine erfindungsgemäße Verbundfolie im Querschnitt;
- Fig. 3: eine erfindungsgemäße Verbundfolie mit von außen nach innen hin fallender Konzentration eines Wasser-Bindemittels.

### Beschreibung der Ausführungsbeispiele

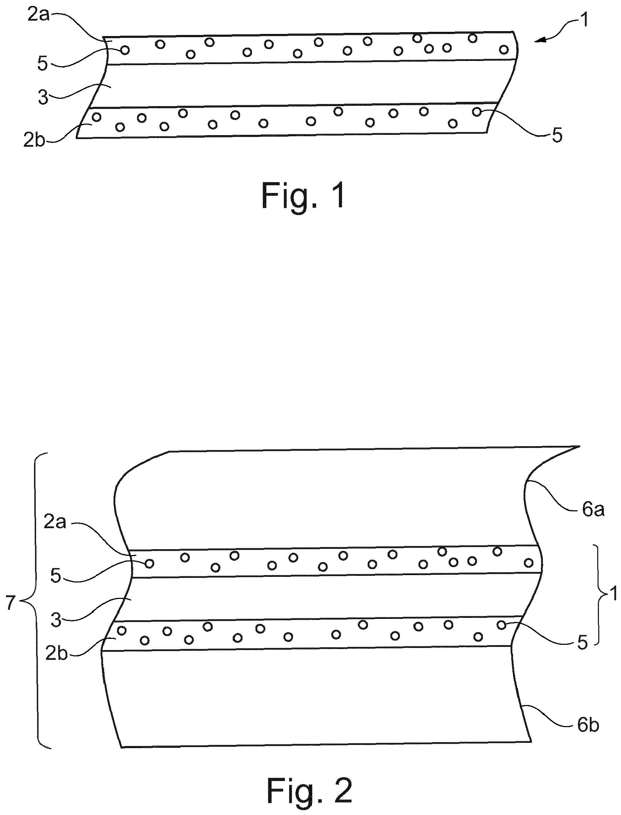

Die Figur 1 zeigt eine erfindungsgemäße Barrierefolie 1 die eine Gas-Barriere-Schicht 3 aus Ethylen-Vinylalkohol-Copolymer und zwei Schutzschichten 2a, 2b aus Polypropylen aufweist.

Die Barrierefolie 1 wurde mittels Coextrusion hergestellt, sodass die Schutzschichten 2 die Gas-Barriere-Schicht 3 zu beiden Seiten der Gas-Barriere-Schicht 3 einbetten und mit dieser fest verbunden sind. Hierbei wurde dem Polypropylen-Granulat für die Herstellung der Schutzschichten 2a und 2b ein Wasser-Bindemittel 5 als Pulver, bzw. zum einfacheren Handling als Masterbatch, bestehend aus Calciumoxid CaO beigemengt, sodass dieses Bindemittel fein verteilt in der fertigen Barrierefolie 1 in den Schutzschichten 2a und 2b der Barrierefolie enthalten ist.

Die Figur 2 zeigt eine Verbundfolie 7, bei der die Barrierefolie 1 zwischen einer ersten Zusatzschicht 6a aus Polypropylen und einer zweiten Zusatzschicht 6b aus Polypropylen eingebettet ist. Bei bestimmungsgemäßer Verwendung der Verbundfolie zum Verpacken eines Produkts bildet z.B. die erste Zusatzschicht 6a eine Außenseite der Verpackung und die zweite Zusatzschicht 6b eine Innenseite der Verpackung. Die erste Zusatzschicht 6a ist mit Produktinformationen bedruckt (nicht dargestellt). Die zweite Zusatzschicht 6b bildet eine Siegelschicht.

Die in Figur 1 gezeigte Barrierefolie 1 kann aber auch ohne diese Zusatzschichten 6a und 6b als Verpackungsfolie genutzt werden. In diesem Fall bildet eine der Schutzschichten 2a eine äußere - gegebenenfalls bedruckte - Schicht, während die andere Schutzschicht 2b eine innere zum Siegeln vorgesehene Schicht bildet.

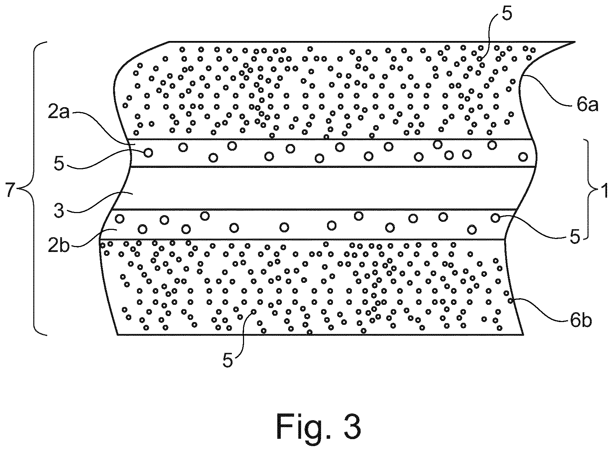

In der Figur 3 ist eine weitere Ausbildungsform der Verbundfolie 7 dargestellt, bei der in den Zusatzschichten 6a und 6b ebenfalls ein Wasser-Bindemittel 5 enthalten ist. Hierbei kann es sich um dasselbe Wasser-Bindemittel 5 wie in der Barrierefolie 1 oder auch um ein anderes Wasser-Bindemittel 5 handeln. Im vorliegenden Fall sei angenommen, dass für die Schutzschichten 2a und 2b und die Zusatzschichten 6a und 6b nur ein bestimmtes Wasser-Bindemittel 5 zum Einsatz kommt, allerdings ist die Konzentration des Wasser-Bindemittels 5 in den PP-Schutzschichten 2a und 2b der Barrierefolie 1 eine andere, im vorliegenden Fall geringere als in den beiden Zusatzschichten 6a und 6b. Dies ist durch eine unterschiedliche Dichte der das Wasser-Bindemittel 5 andeutenden Körner dargestellt.

Abschließend sei festgestellt, dass die grobkörnig dargestellte Verteilung des Wasser-Bindemittels 5 lediglich der Visualisierung dient und die tatsächliche Verteilung feiner und homogener ist.

Es wird abschließend noch einmal darauf hingewiesen, dass es sich bei den vorangehend detailliert beschriebenen Figuren nur um Ausführungsbeispiele handelt, welche vom Fachmann in verschiedenster Weise modifiziert werden können, ohne den Bereich der Erfindung zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können.

## Patentansprüche

1. Barrierefolie (1), die aufweist:
- eine Gas-Barriere-Schicht (3) aus Ethylen-Vinylalkohol-Copolymer und
- zwei Schutzschichten (2a, 2b) aus Polypropylen, welche die Gas-Barriere-Schicht (3) beidseitig einbetten und die ein Wasser-Bindemittel (5) enthalten.

2. Barrierefolie (1) nach Anspruch 1, wobei das Wasser-Bindemittel (5) dazu geeignet ist, Wasser im Wesentlichen irreversibel zu binden.

3. Barrierefolie (1) nach einem der vorangehenden Ansprüche, wobei das Wasser-Bindemittel (5) zur chemischen Bindung von Wasser geeignet ist.

4. Barrierefolie (1) nach Anspruch 3, wobei die chemische Bindung im Wesentlichen darauf beruht, dass das Wasser-Bindemittel (5) mit Wasser zu Hydroxid bzw. Säure reduziert.

5. Barrierefolie (1) nach einem der Ansprüche 3 bis 4, wobei das Wasser-Bindemittel (5) zumindest ein Element der nachfolgend angeführten Gruppe aufweist bzw. damit realisiert ist, nämlich:
- Calciumoxid, chemische Summenformel CaO,
- Phosphorpentoxid, chemische Summenformel P₄O₁₀, bzw. Diphosphorpentoxid, chemische Summenformel P₂O₅,
- Calciumchlorid, chemische Summenformel CaCl₂,
- Kaliumhydroxid, chemische Summenformel KOH,
- Kupfersulfat, chemische Summenformel Cu(SO₄).

6. Barrierefolie (1) nach einem der vorangehenden Ansprüche 1 bis 2 oder einem der Ansprüche 3 bis 5, wobei das Wasser-Bindemittel (5) zur physikalischen Bindung von Wasser geeignet ist.

7. Barrierefolie (1) nach Anspruch 6, wobei die physikalische Bindung im Wesentlichen darauf beruht, dass das Wasser-Bindemittel (5) Wasser in seiner Molekular- bzw. Kristallstruktur einbettet bzw. in dieser Struktur absorbiert.

8. Barrierefolie (1) nach einem der Ansprüche 6 bis 7, wobei das Wasser-Bindemittel (5) zumindest ein Element der nachfolgend angeführten Gruppen aufweist bzw. damit gebildet ist, nämlich:
- Zeolithe,
- Alkali-Aluminumsilikate,
- Erdalkali-Aluminumsilikate.

9. Barrierefolie (1) nach einem der vorangehenden Ansprüche, wobei zumindest eine Schutzschicht (2a, 2b) bedruckt ist, bevorzugt nur eine einzige Schutzschicht (2a, 2b) bedruckt ist.

10. Barrierefolie (1) nach einem der vorangehenden Ansprüche, wobei zumindest eine Schutzschicht (2a, 2b) eine Siegelschicht bildet, insbesondere nur eine einzige Schutzschicht (2a, 2b) eine Siegelschicht bildet.

11. Verbundfolie (7), die aufweist:
- zumindest eine Barrierefolie (1) nach einem der vorangehenden Ansprüche 1 bis 10 und
- zumindest eine weitere Schicht (6a, 6b), insbesondere eine Polypropylen-Schicht, bzw. eine weitere Folie, insbesondere eine Polypropylen-Folie, benachbart zu der Barrierefolie (1).

12. Verbundfolie (7), nach Anspruch 11, wobei die Barrierefolie (1) beidseitig in besagte weitere Schicht (6a, 6b) oder weitere Folie eingebettet ist.

13. Verwendung einer Barrierefolie (1),
wobei die Barrierefolie (1)
- eine Gas-Barriere-Schicht (3) aus Ethylen-Vinylalkohol-Copolymer (EVOH) und
- zwei Schutzschichten (2a, 2b) aus Polypropylen (PP), welche die Gas-Barriere-Schicht (3) beidseitig einbetten und die ein Wasser-Bindemittel (5) enthalten, aufweist,
als Verpackungsmaterial oder Bestandteil eines Verpackungsmaterial in einer Wärmebehandlung mit erhöhter Feuchtigkeit zu Verminderung des "Retort-Schocks".

14. Verwendung einer Barrierefolie (1) nach Anspruch 13 in einem Autoklav.

15. Herstellungsverfahren für eine Barrierefolie (1), wobei eine Gas-Barriere-Schicht (3) aus Ethylen-Vinylalkohol-Copolymer beidseitig in jeweils eine Schutzschicht (2a, 2b) aus Polypropylen eingebettet wird, insbesondere durch Coextrusion, wobei in die Schutzschicht (3) ein Wasser-Bindemittel (5) eingebracht wird, insbesondere in der Größenordnung von 1 bis 20 Prozent der jeweiligen Schutzschicht (2a, 2b).
